# EUROPEAN PATENT APPLICATION

(11) **EP 4 704 040 A1**
(43) Date of publication of application: **04.03.2026**
(21) Application number: 24196496.4
(22) Date of filing: 26.08.2024
(51) Int. Cl.: G06T 19/00, G06T 15/20

(54) **ANATOMICAL REGION RENDERING**

(71) Applicant: Koninklijke Philips N.V., 5656 AG Eindhoven (NL)
(72) Inventor: ELENBAAS, Thijs, Eindhoven (NL); HENDRIKS, Bernardus Hendrikus Wilhelmus, Eindhoven (NL); BLIJD, Järl John Paul, Eindhoven (NL); KESSELS, Angelique Carin Johanna Maria, Eindhoven (NL); HELMSTRIJD, Ronald Christiaan, Eindhoven (NL); KONTAXIS, Charis, Eindhoven (NL); OPHEIJ, Martinus Cornelis, Eindhoven (NL); VAN RIEL, Sjors, Eindhoven (NL); RUIJTERS, Daniel Simon Anna, Eindhoven (NL)
(74) Representative: Philips Intellectual Property & Standards

(57) **Abstract**

A system for providing a rendering of an anatomical region, is provided. The system includes one or more processors configured to: selectively generate, based on a tracked position of an interventional device (120) with respect to a volumetric representation (130) of an anatomical region, a first or a second rendering of the anatomical region, the first and second renderings providing different perspectives (160, 160', 160") of the anatomical region; and output the first rendering, or the second rendering, respectively

## Description

### TECHNICAL FIELD

The present disclosure relates to providing a rendering of an anatomical region. A system, a computer-implemented method, and a computer program product, are disclosed.

### BACKGROUND

Interventional procedures are often supported by the acquisition of medical images. For instance, prior to an interventional procedure, a volumetric image may be acquired. The volumetric image may be a computed tomography "CT" image, or a magnetic resonance imaging "MRI" image, or a 3D ultrasound image, for example. The volumetric image may be referred-to as a pre-procedural image. The volumetric image may be used to diagnose a medical condition and also to plan a subsequent interventional procedure. For instance, the path of an interventional device between an entry point and a treatment location, i.e. a "planned path" may be defined in the volumetric image. During the procedure, further medical images, also known as "intra-procedural" images, may be acquired. For instance, projection X-ray images such as fluoroscopic images may be acquired during the procedure. These images are used to support the navigation of interventional devices to the treatment location in the anatomy. For instance, a physician may mentally map the position of an interventional device such as a catheter, from the intra-procedural images, and onto the planned path in the pre-procedural volumetric image, in order to confirm that the correct path is being followed.

However, the navigation of interventional devices in the anatomy is challenging. It requires good hand-eye coordination, and also requires good spatial awareness, in order to mentally map the positions of such devices from the intra-procedural images to the pre-procedural volumetric image. In order to assist physicians with this mental mapping, existing navigation systems typically enable physicians to manually adjust a zoom level and an orientation of the pre-procedural volumetric image so as to provide a rendering of the anatomy from a perspective that corresponds to the current position of the interventional device. However, it is challenging to perform such manual adjustments during an interventional procedure, and so many interventional device navigation procedures are currently performed using pre-procedural volumetric images that provide a fixed perspective of the anatomy.

Consequently, there is a need to improve the way in which the anatomy is visualized during interventional procedures.

### SUMMARY

According to one aspect of the present disclosure, a system for providing a rendering of an anatomical region, is provided. The system includes one or more processors configured to:
selectively generate, based on a tracked position of an interventional device with respect to a volumetric representation of an anatomical region, a first or a second rendering of the anatomical region, the first and second renderings providing different perspectives of the anatomical region; and
output the first rendering, or the second rendering, respectively.

Since the system selectively generates the first or the second rendering based on the tracked position of the interventional device, the system automatically adjusts the perspective of the anatomical region in accordance with the movement of the device. This obviates the need to manually adjust the perspective during tasks such as interventional device navigation, and consequently facilitates interventional device navigation in a more straightforward manner.

Further aspects, features, and advantages of the present disclosure will become apparent from the following description of examples, which is made with reference to the accompanying drawings.

### BRIEF DESCRIPTION OF THE DRAWINGS

Fig. 1 is a schematic diagram illustrating an example of a system 100 for providing a rendering of an anatomical region, in accordance with some aspects of the present disclosure.
Fig. 2 is a flowchart illustrating an example of a computer-implemented method of providing a rendering of an anatomical region, in accordance with some aspects of the present disclosure.
Fig. 3 is a first example of a rendering 140 of an anatomical region, in accordance with some aspects of the present disclosure.
Fig. 4 is a second example of a rendering 150 of an anatomical region, in accordance with some aspects of the present disclosure.
Fig. 5 is a third example of a rendering 150' of an anatomical region, in accordance with some aspects of the present disclosure.
Fig. 6 is a schematic diagram illustrating an example of a volumetric representation 130 of an anatomical region, in accordance with some aspects of the present disclosure.

### DETAILED DESCRIPTION

Examples of the present disclosure are provided with reference to the following description and figures. In this description, for the purposes of explanation, numerous specific details of certain examples are set forth. Reference in the specification to "an example", "an implementation" or similar language means that a feature, structure, or characteristic described in connection with the example is included in at least that one example. It is also to be appreciated that features described in relation to one example may also be used in another example, and that all features are not necessarily duplicated in each example for the sake of brevity. For instance, features described in relation to a system, may be implemented in a computer-implemented method, and in a computer program product, in a corresponding manner.

In the following description, reference is made to a system for providing a rendering of an anatomical region. The rendering is generated based on a tracked position of an interventional device. In some examples, reference is made to providing a rendering of an anatomical region that includes a portion of the vasculature and the tracked position of the interventional device is within the vasculature. For instance, some examples relate to providing renderings of portions of the cardiac vasculature and wherein the tracked position of an interventional device is within a coronary blood vessel. It is noted that in such examples, the vasculature may include various types of blood vessels. For instance, the vasculature may include arteries, veins, or capillaries. Thus, in such examples, the tracked position of the interventional device may be within any of such vessels. More generally, the system may be used to provide renderings of anatomical regions that include one or more lumens and wherein the tracked position of the interventional device is within one of the one or more lumens. For instance, the system may be used to provide renderings of a portion of the lung that includes one or more airways, e.g. bronchi, and wherein the tracked position of the interventional device is within one or the one or more airways. However, it is also noted that the system is not limited to providing renderings of a particular anatomical region. Nor is the system limited to providing renderings of anatomical regions wherein the tracked position of the interventional device is within a lumen. The system may therefore be used to provide renderings of anatomical regions in general. For instance, the system may be used to provide renderings of anatomical regions such as the lung, the brain, the leg, the arm, and so forth.

It is noted that the computer-implemented methods disclosed herein may be provided as a non-transitory computer-readable storage medium including computer-readable instructions stored thereon, which, when executed by at least one processor, cause the at least one processor to perform the method. In other words, the computer-implemented methods may be implemented in a computer program product. The computer program product can be provided by dedicated hardware, or hardware capable of running the software in association with appropriate software. When provided by a processor, the functions of the method features can be provided by a single dedicated processor, or by a single shared processor, or by a plurality of individual processors, some of which can be shared. The functions of one or more of the method features may for instance be provided by processors that are shared within a networked processing architecture such as a client/server architecture, a peer-to-peer architecture, the Internet, or the Cloud.

The explicit use of the terms "processor" or "controller" should not be interpreted as exclusively referring to hardware capable of running software, and can implicitly include, but is not limited to, digital signal processor "DSP" hardware, read only memory "ROM" for storing software, random access memory "RAM", a non-volatile storage device, and the like. Furthermore, examples of the present disclosure can take the form of a computer program product accessible from a computer-usable storage medium, or a computer-readable storage medium, the computer program product providing program code for use by or in connection with a computer or any instruction execution system. For the purposes of this description, a computer-usable storage medium or a computer-readable storage medium can be any apparatus that can comprise, store, communicate, propagate, or transport a program for use by or in connection with an instruction execution system, apparatus, or device. The medium can be an electronic, magnetic, optical, electromagnetic, infrared, or a semiconductor system or device or propagation medium. Examples of computer-readable media include semiconductor or solid-state memories, magnetic tape, removable computer disks, random access memory "RAM", read-only memory "ROM", rigid magnetic disks and optical disks. Current examples of optical disks include compact disk-read only memory "CD-ROM", compact disk-read/write "CD-R/W", Blu-Ray^{™} and DVD.

It is also noted that some operations that are described as being performed by the one or more processors of the system disclosed herein may be implemented using artificial intelligence techniques. Suitable techniques may include machine learning techniques, deep learning techniques, and neural networks. For instance, one or more neural networks, may be trained in a supervised, or in some cases unsupervised, manner, to implement the operations that are performed by the one or more processors.

As mentioned above, there is a need to improve the way in which the anatomy is visualized during interventional procedures.

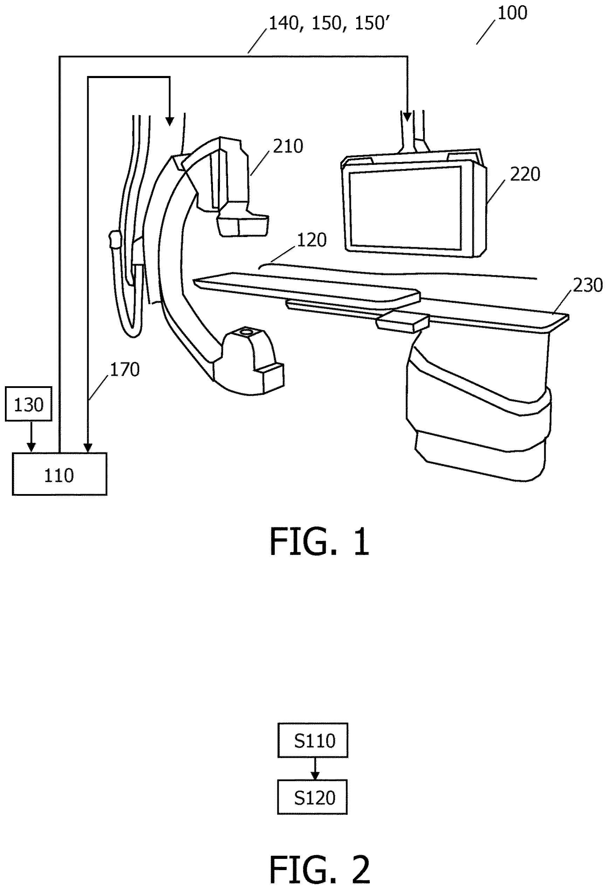

Fig. 1 is a schematic diagram illustrating an example of a system 100 for providing a rendering of an anatomical region, in accordance with some aspects of the present disclosure. Fig. 2 is a flowchart illustrating an example of a computer-implemented method of providing a rendering of an anatomical region, in accordance with some aspects of the present disclosure. It is noted that operations that are described as being performed by the one or more processors 110 of the system 100 illustrated in Fig. 1, may also be performed in the method illustrated in Fig. 2. Likewise, operations that are described in relation to the method described with reference to Fig. 2 may also be performed by the one or more processors 110 of the system 100 illustrated in Fig. 1.

With reference to Fig. 1, and Fig. 2, the system 100 for providing a rendering of an anatomical region includes one or more processors 110 configured to:
selectively generate S 110, based on a tracked position of an interventional device 120 with respect to a volumetric representation 130 of an anatomical region, a first or a second rendering 140, 150, 150' of the anatomical region, the first and second renderings providing different perspectives 160, 160', 160" of the anatomical region; and
output S120 the first rendering 140, or the second rendering 150, 150', respectively.

Since the system selectively generates the first or the second rendering based on the tracked position of the interventional device, the system automatically adjusts the perspective of the anatomical region in accordance with the movement of the device. This obviates the need to manually adjust the perspective during tasks such as interventional device navigation, and consequently facilitates interventional device navigation in a more straightforward manner.

The operations that are performed by the processor(s) of the system 100 are described in more detail below.

Referring initially to the operation S 110 illustrated in Fig. 2; in this operation a first or a second rendering 140, 150, 150' of an anatomical region is selectively generated based on a tracked position of an interventional device 120 with respect to a volumetric representation 130 of an anatomical region.

In the operation S 110; the position of an interventional device 120 is therefore tracked with respect to a volumetric representation 130 of an anatomical region.

In general, the interventional device that is tracked in the operation S 110 may be any type of interventional device. In some examples, the interventional device is an intraluminal device. For instance, the interventional device may be an intravascular device such as a catheter, a guidewire, an intravascular ultrasound "IVUS" imaging device, or an optical coherence tomography "OCT" imaging device, for example. The interventional device may alternatively be a different type of intraluminal device. For instance, the interventional device may be an endoscope (e.g. a bronchoscope for navigating through the airways of the lung). The interventional device may alternatively be a different type of device, such as a needle, or a surgical laser.

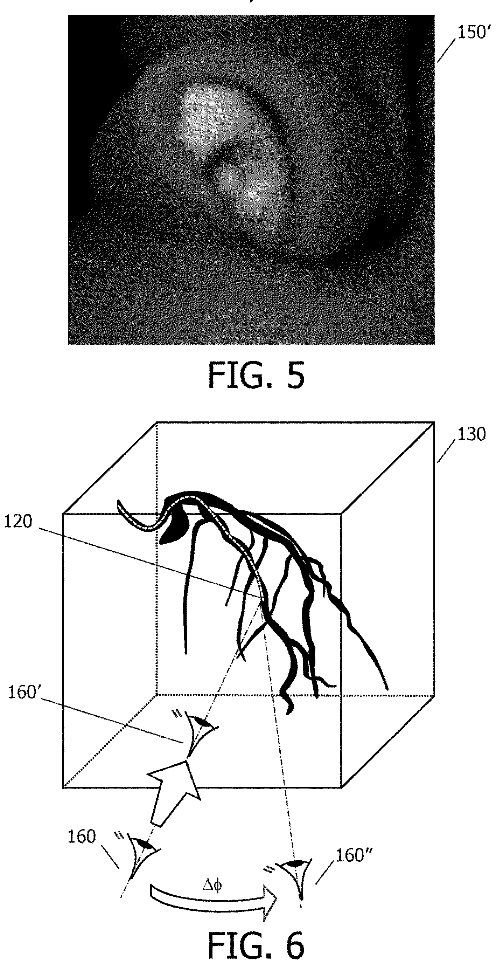

In general, any anatomical region may be represented in the volumetric representation 130 that is used in the operation S 110. In some examples, the anatomical region includes one or more lumens. For instance, the anatomical region may include a portion of the vasculature, or it may include one or more airways of the lung. In these examples, the position of the interventional device may be constrained to an intraluminal position, i.e. a position within one of the one or more lumens. For instance, the position of the interventional device may be constrained to an intraluminal position within one of the one or more blood vessels in the vasculature, or an intraluminal position within one of the one or more airways of the lung. In these examples, an intraluminal position of the interventional device may therefore be tracked in the volumetric representation 130 of the anatomical region. An example in which an intraluminal position of an interventional device is tracked within a blood vessel in a volumetric representation of a cardiovascular region is described below with reference to Fig. 6. In this example, an intraluminal position of an intravascular device 120, is tracked within a cardiac artery, as illustrated via the dashed white lines that indicate the position of the intravascular device 120 within the dark-shaded cardiac arteries in Fig. 6.

In general, the volumetric representation 130 of the anatomical region that is used in the operation S 110 may be provided by a volumetric medical image. For instance, the volumetric representation 130 may be provided by a computed tomography image, or by a magnetic resonance image, or by a volumetric ultrasound image.

The volumetric representation 130 of the anatomical region that is used in the operation S 110 may be generated by various types of medical imaging systems. For instance, it may be generated by a volumetric imaging system such as a computed tomography "CT" imaging system, or a magnetic resonance imaging "MRI" system, or by a volumetric, or 3D, ultrasound imaging system. The CT imaging system may be a cone beam CT imaging system, or a spectral CT imaging system. Cone beam CT imaging systems generate CT images using a divergent beam of X-rays that form a conical shape. Spectral CT imaging systems generate X-ray attenuation data representing X-ray attenuation within multiple different energy intervals. The X-ray attenuation data generated by a spectral CT imaging system may be processed, e.g. using various material decomposition algorithms, in order to distinguish between media that have similar X-ray attenuation values when measured within a single energy interval, and which would be indistinguishable in X-ray attenuation data obtained using a conventional CT imaging system.

The volumetric representation 130 of the anatomical region that is used in the operation S110 may alternatively be generated by various types of 2D imaging systems. For instance, a CT image may alternatively be generated by rotating an X-ray source-detector arrangement of a projection X-ray imaging system around a region of interest whilst acquiring X-ray projection data from multiple rotational angles with respect to the region of interest. The X-ray projection data from the multiple rotational angles may then be reconstructed using CT image reconstruction techniques to provide a CT image.

In some examples, the volumetric representation 130 of the anatomical region that is used in the operation S110 is generated subsequent to the injection of a contrast agent into the vasculature of a patient. In these examples, the volumetric representation 130 of the anatomical region represents a distribution of a contrast agent in the vasculature. The contrast agent improves the contrast between blood and surrounding tissue. In these examples, the volumetric representation 130 of the anatomical region may be referred-to as a volumetric angiographic image. A volumetric angiographic image may be generated by a (cone beam/ spectral) CT imaging system, or by an MRI system. A volumetric angiographic image may alternatively be generated by an MRI system in the absence of a contrast agent. Such images are often referred-to as non-contrast-enhanced MR angiography "NC-MRA" images.

The volumetric representation 130 of the anatomical region that is used in the operation S110 may be received by the processor(s) 110. The processor(s) 110 may receive the volumetric representation 130 from various sources. For instance, the volumetric representation 130 may be received from a medical imaging system such as one of the example imaging systems described above. The volumetric representation 130 may alternatively be received from another source, such as a computer-readable storage medium, the Internet, the Cloud, and so forth. In the example illustrated in Fig. 1, the volumetric representation is received from a computer-readable storage medium. In general, the volumetric representation 130 may be received by the one or more processors 110 via any form of data communication. For example, the volumetric angiographic image 120 may be received via wired, or wireless, or optical fiber communication. By way of some examples, when wired data communication is used, the communication may take place via electrical signals that are transmitted on an electrical cable. When wireless data communication is used, the communication may take place via RF or infrared signals. When an optical fiber data communication is used, the communication takes place via optical signals that are transmitted on an optical fiber.

With continued reference to the operation S110 illustrated in Fig. 2, a tracked position of the interventional device with respect to the volumetric representation of the anatomical region, is used to selectively generate a first or a second rendering of the anatomical region.

The tracking that is performed in the operation S110 may be performed using various known tracking techniques. The use of image-based tracking, or alternatively a tracking system, is contemplated. For instance, in one example, the one or more processors 110 are configured to:
receive live medical images 170 representing a current position of the interventional device 120 within the anatomical region; and
determine the tracked position of the interventional device 120 with respect to the volumetric representation 130 of the anatomical region based on a registration between the live medical images 170 and the volumetric representation 130 of the anatomical region.

In this example, the live medical images 170 may be generated by a medical imaging system such as a projection X-ray imaging system, or an ultrasound imaging system. In the former case, the live medical images 170 may be conventional X-ray projection images or they may be fluoroscopic images. Fluoroscopic images are typically generated using a relatively lower X-ray dose than conventional X-ray projection images. In the example illustrated in Fig. 1, the live medical images 170 that are used to determine the tracked position of the interventional device are fluoroscopic images that are generated by the projection X-ray imaging system 210. The registration between the live medical images 170 and the volumetric representation 130 may be performed using known image registration techniques. In general, this registration may include a non-rigid and/or a rigid registration. An example of an image registration technique that may be used for this purpose for a cardiac vessel undergoing cardiac motion is described in the document WO2012/107857A1. Since the live medical images 170 represent the current position of the interventional device 120 within the anatomical region, the registration facilitates a mapping of the current position of the interventional device in the live medical images 170, onto a corresponding tracked position in the volumetric representation 130 of the anatomical region.

It is noted that the operation of determining the tracked position of the interventional device 120 with respect to the volumetric representation 130 may include performing a segmentation of the interventional device 110 in the live medical images 170. The segmentation may be used to identify a position on the interventional device, such as its distal end, for example. This segmentation may be performed using known image segmentation techniques. The segmentation facilitates the mapping of the identified position on the interventional device in the live medical images 170, onto a corresponding tracked position in the volumetric representation 130. Instead of performing a segmentation, a position on the interventional device may be identified using other techniques, such as by analyzing the live medical images 170 using a trained neural network, or a feature detector.

In another example, instead of determining the tracked position of the interventional device using live medical images, tracking data is used. In this example, the one or more processors 110 are configured to:
receive tracking data representing a location of the interventional device 120 within the anatomical region; and
determine the tracked position of the interventional device 120 with respect to the volumetric representation 130 of the anatomical region based on the received tracking data.

In this example, the tracking data may be provided by various types of tracking systems. The tracking data may be provided by an electromagnetic tracking system, or by an optical fiber-based tracking system, for instance. An electromagnetic tracking system may be used to track the position of an interventional device by tracking the positions of one or more markers that are attached to the interventional device. An example of an electromagnetic tracking system is disclosed in the document US 2020/397510 A1. An optical fiber-based tracking system may be used to track the position of an interventional device by arranging the optical fiber(s) of the optical fiber-based system along the interventional device and tracking the shape of the optical fiber(s) via strain sensors that are embedded therein. An example of an optical fiber-based tracking system is disclosed in the document US 2012/323115 A1. In such tracking systems, a reference coordinate system of the tracking system is registered to the coordinate system of the volumetric representation 130 of the anatomical region. This registration is used to map a position of the interventional device in the reference coordinate system of the tracking system to a tracked position in the coordinate system of the volumetric representation 130.

The tracking operation described above results in a tracked position of the interventional device 120 with respect to the volumetric representation 130 of the anatomical region. With continued reference to the operation S110 illustrated in Fig. 2; the processor(s) use the tracked position, to selectively generate a first or a second rendering 140, 150, 150' of the anatomical region. The first and second renderings provide different perspectives of the anatomical region.

The perspectives of the first and second renderings may be different in the sense that they represent different zoom levels, or views of the anatomical region that are generated from different orientations with respect to the interventional device or the anatomical region. In some examples, at least one of the first rendering and the second rendering may provide: a view of the anatomical region from a position on the interventional device 150', a view 140, 150 of the anatomical region from a remote position with respect to the interventional device or the anatomical region, a view 150' of the anatomical region from a position within a vessel in the anatomical region, a view 140, 150 of the anatomical region from an external position with respect to a vessel in the anatomical region. A combination of these examples may also be used to provide different first and second perspectives of the anatomical region. The first and second perspectives may alternatively differ in other ways. For instance, the perspectives may represent views of the anatomical region that are generated from different rotational angles with respect to the interventional device or the anatomical region.

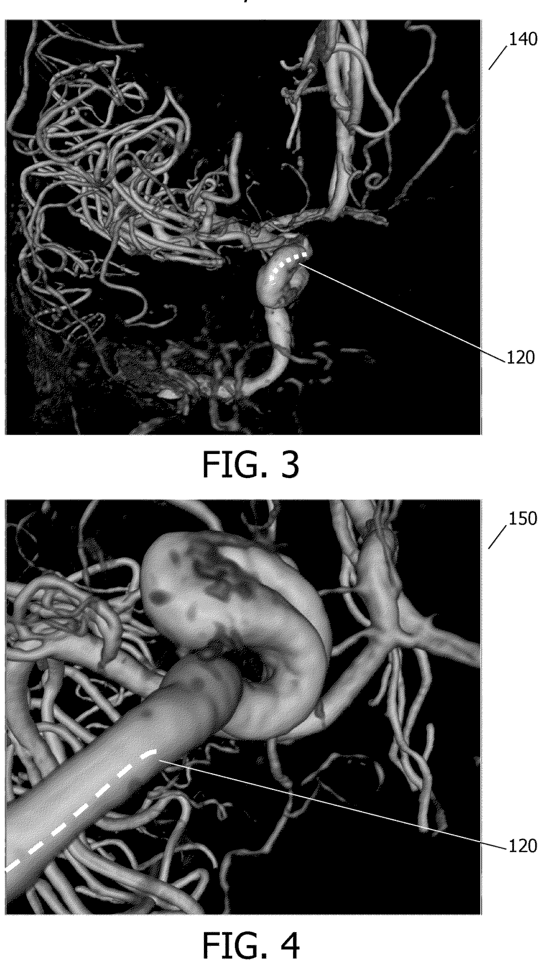

Various examples of renderings that may serve as the first or second rendering are now described with reference to Fig. 3 - Fig. 6. Fig. 3 is a first example of a rendering 140 of an anatomical region, in accordance with some aspects of the present disclosure. The anatomical region represented in Fig. 3 includes a portion of the vasculature. The rendering illustrated in Fig. 3 provides a certain perspective of the anatomical region. The perspective may be described by the orientation from which the anatomical region or interventional device is viewed, and also by the zoom level with which the anatomical region or interventional device is viewed. Fig. 4 is a second example of a rendering 150 of an anatomical region, in accordance with some aspects of the present disclosure. The rendering illustrated in Fig. 4 provides a different perspective of the anatomical region to that illustrated in Fig. 3. For instance, the perspective of Fig. 4 has an increased zoom level in comparison to the perspective of Fig. 3. The perspective of Fig. 4 is also generated from a different orientation with respect to the anatomical region. Fig. 5 is a third example of a rendering 150' of an anatomical region, in accordance with some aspects of the present disclosure. The rendering illustrated in Fig. 5 provides a different perspective of the anatomical region to that illustrated in both Fig. 3 and Fig. 4. The rendering illustrated in Fig. 5 provides a view 150' of the anatomical region from a position within a vessel in the anatomical region. By contrast, the renderings illustrated in Fig. 3 and in Fig. 4 provide views of the anatomical region from external positions with respect to vessels in the anatomical region.

Some examples of different perspectives of an anatomical region are illustrated in Fig. 6, which is a schematic diagram illustrating an example of a volumetric representation 130 of an anatomical region, in accordance with some aspects of the present disclosure. In the example illustrated in Fig. 6, the anatomical region includes a portion of the cardiac vasculature. The perspective 160 provides a view of the cardiac vasculature as if a user were looking from the position of the eye symbol, along the dashed line, and towards the center of the cardiac vasculature. The perspective 160' is different to the perspective 160 because the perspective 160' provides a view of the cardiac vasculature with a relatively higher zoom level than the perspective 160. The perspective 160" is different to the perspectives 160 and 160' because it because it provides a view of the cardiac vasculature from a different orientation with respect to the cardiac vasculature; i.e. an orientation that has been adjusted by the angle Δϕ. By way of an example, the rendering 140 illustrated in Fig. 3 may be obtained using the perspective 160" illustrated in Fig. 6, and the rendering 150 illustrated in Fig. 4 may be obtained using the perspective 160' illustrated in Fig. 6.

Referring now to the selective generation of the first or the second rendering that is performed in the operation S110; in this operation the tracked position of the interventional device 120 with respect to the volumetric representation 130 is used to selectively generate a first or a second rendering. The first and second renderings provide different perspectives of the anatomical region, as described above. The renderings are generated from the volumetric representation 130 of the anatomical region. These renderings may be generated from the volumetric representation 130 using known image processing techniques. For instance, as illustrated in Fig. 6, a perspective 160, 160', 160" with respect to the anatomical region 130 may be defined by the location of a virtual eye in relation to the volumetric representation 130. The location of the virtual eye defines a zoom level and an orientation with respect to a volumetric representation 130 that may be used to model the view of the anatomical region that would be experienced by a user with their eye in the position of the virtual eye.

In general, the selective generation that is performed in the operation S 110 refers to a choice between renderings that provide different perspectives of the anatomical region. The selection, or choice, may be made at any point in time. For instance, the system 100 may output a set of one or more image frames with a rendering that provides a first perspective of the anatomical region. A rendering that provides a second perspective of the anatomical region may then be selected, and the system may then output a subsequent set of one or more image frames with a rendering that provides the second perspective. The transition between the different perspectives may therefore occur between consecutively-outputted image frames, or in other words, instantaneously. The selection may also be continuously updated over time. Thus, following the selection described above, i.e. at a later point in time, a rendering that provides the first perspective of the anatomical region may again be selected and the system then outputs a set of one or more image frames with a rendering that provides the first perspective. In some examples, a gradual transition between the different perspectives is provided. In these examples, the system outputs a rendering with a given perspective at a first point in time, and the system then outputs a rendering that provides a different perspective at a second point in time. The system also outputs further renderings that provide intermediate perspectives of the anatomical region between the first and second points in time in order to provide a gradual transition between the perspective of the earlier rendering and the perspective of the later rendering.

In general, the one or more processors may select the first or the second rendering by using an algorithm to select the rendering based on various conditions that relate to the tracked position of the interventional device. Examples of these conditions are described in the examples below.

In one example, the operation of selectively generating S 110 a first or a second rendering 140, 150, 150' of the anatomical region includes determining a diameter of a vessel in the anatomical region in which the interventional device 120 is located based on the tracked position of the interventional device and selectively generating the first or the second renderings based on the diameter of the vessel.

In this example the system therefore uses the diameter of the vessel to provide different perspectives of the anatomical region. For instance, if the interventional device 120 is currently located in a relatively narrow vessel, the system may generate a view of the anatomical region from a remote position with respect to the interventional device, such as the view illustrated in Fig. 3. The context that is provided by the remote position may assist a physician in determining the vessel in which the interventional device is currently located. By contrast, if the interventional device 120 is currently located in a relatively wider vessel, the system may generate a view 150' of the anatomical region from a position within a vessel in the anatomical region, such as the view illustrated in Fig. 5.

In one example, the operation of selectively generating S 110 a first or a second rendering of the anatomical region includes determining a motion of the interventional device 120 based on the tracked position and selectively generating the first or the second renderings based on the motion of the interventional device.

In this example, the system may use aspects of the motion of the interventional device, such as its speed, or its acceleration, to provide different perspectives of the anatomical region. For instance, if the interventional device 120 is moving relatively rapidly along a vessel, the system may generate a view of the anatomical region from a remote position with respect to the interventional device, such as the view illustrated in Fig. 3. By contrast, if the interventional device 120 is moving relatively slowly along a vessel, the system may generate a view 150' of the anatomical region from a position within a vessel in the anatomical region, such as the view illustrated in Fig. 5. The slow movement of the device therefore triggers the provision of a more detailed view of the vessel.

In one example, the operation of selectively generating S 110 a first or a second rendering 140, 150, 150' of the anatomical region includes:
determining an average motion of the interventional device 120 based on the tracked position, and selectively generating the first or the second renderings based on the average motion of the interventional device;
   or
determining an average position of the interventional device 120 based on the tracked position, and selectively generating the first or the second renderings based on the average position of the interventional device.

In these examples the average motion or position is used to provide different perspectives of the anatomical region. The averaging reduces the frequency at which the changes in the renderings are triggered as the interventional device moves and results in a less jerky appearance of the anatomical region. Different degrees of averaging may also be applied to the motion or position of the interventional device depending on the rendering. For instance, a higher degree of averaging may be used to generate a rendering providing the views 140, 150 of the anatomical region from a remote position with respect to the interventional device or the anatomical region, than that used to provide the view 150' of the anatomical region from a position within a vessel in the anatomical region.

As mentioned above, in some examples, the system provides an instantaneous transition between the different perspectives. The transition may take place between consecutive image frames, for instance. In other examples, the system provides a gradual transition between the different perspectives. In these examples, further renderings of the anatomical region are generated between the first rendering 140 and the second rendering 150, 150' in order to provide the gradual transition between the perspective of the first rendering and the perspective of the second rendering. In this example, the one or more processors 110 are configured to:
generate, based on the tracked position of the interventional device 120, a plurality of further renderings of the anatomical region, the further renderings providing intermediate perspectives of the anatomical region between the first rendering 140 and the second rendering 150, 150'; and
wherein the outputting S120, comprises outputting the further renderings between the first rendering 140 and the second rendering 150, 150' to provide a gradual transition between the perspective 160 of the first rendering and the perspective 160', 160" of the second rendering.

The gradual transition between the perspectives provides a physician with spatial context during the change in the perspectives, and therefore assists the physician in mentally following the interventional device as it moves through the anatomical region. By way of an example, a gradual transition may be provided between the view 140 illustrated in Fig. 4 in which the view represents the anatomical region from a remote position with respect to the interventional device, and the view 150' illustrated in Fig. 5 in which the view represents the anatomical region from a position within a vessel in the anatomical region. The further renderings of the anatomical region may be provided across multiple outputted image frames. For instance, an orientation and a zoom level may be adjusted gradually in the renderings that are outputted in successive image frames to provide a user with the experience of gradually moving of their eye from the remote position used to obtain the rendering illustrated in Fig. 4, to the position within the vessel used to obtain the rendering illustrated in Fig. 5. The gradual transition may be determined based on aspects of the tracked positions of the interventional device such as its speed, or its acceleration. For instance, if the current rendering is a view 150' of the anatomical region from a position within a vessel in the anatomical region as illustrated in Fig. 5, and the interventional device moves suddenly, the system may provide a gradual transition to the view 140 of the anatomical region from a remote position with respect to the interventional device illustrated in Fig. 4, and wherein the magnitude of the change in orientation is determined based on the speed of the interventional device. Thus, a rapid movement of the interventional device may result in a change in perspective to a more offset position than that illustrated in Fig. 4, whereas, a relatively slower movement of the interventional device may result in a change in perspective to a less offset position than that illustrated in Fig. 4.

In a related example, a gradual transition is provided in both the zoom level and the orientation. In this example, the first rendering and the second rendering provide views 140, 150, of the anatomical region that are generated with different zoom levels and from different orientations with respect to the interventional device 120; and wherein the outputting operation S120, comprises:
outputting the further renderings between the first rendering 140 and the second rendering 150, 150' to provide:
a gradual transition between the zoom level of the first rendering 140 and the zoom level of the second rendering 150, 150'; and
a gradual transition between the orientation of the first rendering and the orientation of the second rendering.

Providing a gradual transition in both the zoom level and the orientation provides a physician with additional spatial context during the change in the perspectives, again assisting the physician in mentally following the interventional device as it moves through the anatomical region.

In another related example, a gradual transition is provided based on a shape of a vessel path at the tracked position of the interventional device 120. In this example, the outputting operation S120, comprises:
outputting the further renderings between the first rendering 140 and the second rendering 150, 150' to provide a gradual transition between the orientation of the first rendering 140 and the orientation of the second rendering 150, 150', the gradual transition being determined based on a shape of a vessel path at the tracked position of the interventional device 120.

In this example, an aspect of the gradual transition, such as the speed or the magnitude of the transition, is dependent on the shape of a vessel path. For instance, if the shape of a vessel path corresponds to a tortuous vessel, the speed of the transition may be relatively slower than for vessel path that is less tortuous.

Referring now to the operation S120 illustrated in Fig. 2; in this operation the first rendering 140, or the second rendering 150, 150', is outputted. The rendering may be outputted in various ways. For instance, it may be outputted to a display device, such as to the monitor 220 illustrated in Fig. 1, or to a virtual/ augmented reality display device, or to printer, or to a computer-readable storage medium, and so forth.

In one example, the operations described above with reference to Fig. 2 are performed repetitively. Thus, a rendering that provides a further perspective that is different to the current perspective may again be generated.

In another example, the selective generation that is described above with reference to Fig. 2 is performed from a group of more than two different renderings. Thus, at any point in time, a rendering may be selected that provides one of more than two different perspectives. Selecting a rendering from a larger group of different renderings enables a more optimal rendering to be provided.

In one example, after having generated the first or the second rendering, the one or more processors 110 are configured to continuously update the first rendering 140, or the second rendering 150, 150', respectively, based on a current tracked position of the interventional device 120 with respect to the volumetric representation 130 of the anatomical region.

In one example, the one or more processors 110 are configured to freeze, in response to user input, a currently-outputted rendering of the anatomical region such that the perspective of the anatomical region in the currently-outputted rendering is fixed whilst a current position of the interventional device 120 within the currently-outputted rendering is continuously updated. In this example, the user input may be provided by a user input device, such as a keyboard, a mouse, a touchscreen, a voice-activated device, and so forth.

It is noted that in some examples, a rendering may include an indication of the tracked position of the interventional device. For instance, renderings that provide a view of the anatomical region from a remote position with respect to the interventional device or the anatomical region, and also renderings that provide views of the anatomical region from an external position with respect to a vessel in the anatomical region, may include an indication of the tracked position of the interventional device. For example, indications of the tracked position of the interventional device may be provided in the example renderings illustrated in Fig. 3 and Fig. 4, as indicated via the dashed white lines in these figures. By contrast, renderings that provide a view from a position within a vessel may not include an indication of the tracked position of the interventional device. Thus, the example rendering illustrated in Fig. 5 does not include an indication of the tracked position of the interventional device.

In one example, the system described above is used to provide renderings of anatomical regions in which multiple interventional devices are deployed. Many interventional procedures are performed using multiple interventional devices. For instance, a stent insertion procedure typically involves the deployment of a guidewire, along which other interventional devices, such as a balloon, are translated. Similarly, heart valve repair procedures are typically performed using multiple interventional devices. In this example, the system may track the positions of one or more additional interventional devices and selectively generate the first or the second renderings based further on the tracked positions of these one or more additional interventional devices. For instance, the selective generation that is performed in the operation S110 may be performed such that the rendering that is generated includes two or more of the multiple devices. Alternatively or additionally, the selective generation that is performed in the operation S110 may be performed based on a type of an interventional device, or based on a usage status of an interventional device. Thus, the type, or the usage status of an interventional device may be used to determine which rendering to generate. The type of the interventional device, and also its usage status, may be determined based on a segmentation of the live medical images representing the current positions of the interventional devices within the anatomical region. Alternatively, a trained machine learning model, e.g. a neural network, or a feature detector, may be used to determine the type, or the usage status, of an interventional device from the live images in a similar manner.

It is noted that in addition to the one or more processors 110, the system 100 may also include one or more of: a medical imaging system for providing the live medical images 170 described above, such as the projection X-ray imaging system 210 illustrated in Fig. 1; a display, such as the display 220 illustrated in Fig. 1, for displaying the outputted rendering, live medical images 170, other outputs generated by the one or more processors 110, and so forth; a patient bed 230; and a user input device (not illustrated in Fig. 1) configured to receive user input in relation to the operations performed by the one or more processors 110, such as a keyboard, a mouse, a touchscreen, a voice-activated device, and so forth.

In another example, a computer-implemented method of providing a rendering of an anatomical region, is provided. The method includes:
selectively generating S110, based on a tracked position of an interventional device 120 with respect to a volumetric representation 130 of an anatomical region, a first or a second rendering 140, 150, 150' of the anatomical region, the first and second renderings providing different perspectives 160, 160', 160" of the anatomical region; and
outputting S 120 the first rendering 140, or the second rendering 150, 150', respectively.

In another example, a computer program product, is provided. The computer program product comprises instructions which when executed by one or more processors, cause the one or more processors to carry out a method of providing a rendering of an anatomical region. The method includes:
selectively generating S 110, based on a tracked position of an interventional device 120 with respect to a volumetric representation 130 of an anatomical region, a first or a second rendering 140, 150, 150' of the anatomical region, the first and second renderings providing different perspectives 160, 160', 160" of the anatomical region; and
outputting S 120 the first rendering 140, or the second rendering 150, 150', respectively.

The above examples are to be understood as illustrative of the present disclosure, and not restrictive. Further examples are also contemplated. For instance, the examples described in relation to a system, may also be provided by the computer-implemented method, or by the computer program product, or by the computer-readable storage medium, in a corresponding manner. It is to be understood that a feature described in relation to any one example may be used alone, or in combination with other described features, and may be used in combination with one or more features of another of the examples, or a combination of other examples. Furthermore, equivalents and modifications not described above may also be employed without departing from the scope of the invention, which is defined in the accompanying claims. In the claims, the word "comprising" does not exclude other elements or operations, and the indefinite article "a" or "an" does not exclude a plurality. The mere fact that certain features are recited in mutually different dependent claims does not indicate that a combination of these features cannot be used to advantage. Any reference signs in the claims should not be construed as limiting their scope.

## Claims

1. A system (100) for providing a rendering of an anatomical region, the system comprising one or more processors (110) configured to:
selectively generate (S110), based on a tracked position of an interventional device (120) with respect to a volumetric representation (130) of an anatomical region, a first or a second rendering (140, 150, 150') of the anatomical region, the first and second renderings providing different perspectives (160, 160', 160") of the anatomical region; and
output (S120) the first rendering (140), or the second rendering (150, 150'), respectively.

2. The system according to claim 1, wherein:
the first rendering and the second rendering provide one or more of: views (140, 150) of the anatomical region with different zoom levels, views (140, 150) of the anatomical region generated from different orientations with respect to the interventional device or the anatomical region;
and/or
at least one of the first rendering and the second rendering provide: a view of the anatomical region from a position on the interventional device (150'), a view (140, 150) of the anatomical region from a remote position with respect to the interventional device or the anatomical region, a view (150') of the anatomical region from a position within a vessel in the anatomical region, a view (140, 150) of the anatomical region from an external position with respect to a vessel in the anatomical region.

3. The system according to claim 1 or claim 2, wherein the selectively generating (S110), comprises determining a diameter of a vessel in the anatomical region in which the interventional device (120) is located based on the tracked position of the interventional device, and selectively generating the first or the second renderings based on the diameter of the vessel.

4. The system according to claim 1 or claim 2, wherein the selectively generating (S110), comprises determining a motion of the interventional device (120) based on the tracked position, and selectively generating the first or the second renderings based on the motion of the interventional device.

5. The system according to any one of claims 1 - 3, wherein the selectively generating (S110), comprises:
determining an average motion of the interventional device (120) based on the tracked position, and selectively generating the first or the second renderings based on the average motion of the interventional device;
or
determining an average position of the interventional device (120) based on the tracked position, and selectively generating the first or the second renderings based on the average position of the interventional device.

6. The system according to any previous claim, wherein the one or more processors (110) are further configured to generate, based on the tracked position of the interventional device (120), a plurality of further renderings of the anatomical region, the further renderings providing intermediate perspectives of the anatomical region between the first rendering (140) and the second rendering (150, 150'); and
wherein the outputting (S120), comprises outputting the further renderings between the first rendering (140) and the second rendering (150, 150') to provide a gradual transition between the perspective (160) of the first rendering and the perspective (160', 160") of the second rendering.

7. The system according to claim 6, wherein the first rendering and the second rendering provide views (140, 150) of the anatomical region that are generated with different zoom levels and from different orientations with respect to the interventional device (120); and
wherein the outputting (S 120), comprises:
outputting the further renderings between the first rendering (140) and the second rendering (150, 150') to provide:
a gradual transition between the zoom level of the first rendering (140) and the zoom level of the second rendering (150, 150'); and
a gradual transition between the orientation of the first rendering and the orientation of the second rendering;
or
outputting the further renderings between the first rendering (140) and the second rendering (150, 150') to provide:
a gradual transition between the orientation of the first rendering (140) and the orientation of the second rendering (150, 150'), the gradual transition being determined based on a shape of a vessel path at the tracked position of the interventional device (120).

8. The system according to any previous claim, wherein the one or more processors (110) are further configured to:
receive live medical images (170) representing a current position of the interventional device (120) within the anatomical region; and
determine the tracked position of the interventional device (120) with respect to the volumetric representation (130) of the anatomical region based on a registration between the live medical images (170) and the volumetric representation (130) of the anatomical region;
or
receive tracking data representing a location of the interventional device (120) within the anatomical region; and
determine the tracked position of the interventional device (120) with respect to the volumetric representation (130) of the anatomical region based on the received tracking data.

9. The system according to claim 8, wherein the tracking data is provided by an electromagnetic tracking system, or by an optical fiber-based tracking system.

10. The system according to any previous claim, wherein the one or more processors (110) are configured to continuously update the first rendering (140), or the second rendering (150, 150'), respectively, based on a current tracked position of the interventional device (120) with respect to the volumetric representation (130) of the anatomical region.

11. The system according to any previous claim, wherein the one or more processors (110) are configured to freeze, in response to user input, a currently-outputted rendering of the anatomical region such that the perspective of the anatomical region in the currently-outputted rendering is fixed whilst a current position of the interventional device (120) within the currently-outputted rendering is continuously updated.

12. The system according to any previous claim, wherein the interventional device (120) comprises an intravascular device.

13. The system according to any previous claim, wherein the volumetric representation (130) of the anatomical region is provided by a computed tomography image, or by a magnetic resonance image, or by a volumetric ultrasound image.

14. A computer-implemented method of providing a rendering of an anatomical region, the method comprising:
selectively generating (S110), based on a tracked position of an interventional device (120) with respect to a volumetric representation (130) of an anatomical region, a first or a second rendering (140, 150, 150') of the anatomical region, the first and second renderings providing different perspectives (160, 160', 160") of the anatomical region; and
outputting (S120) the first rendering (140), or the second rendering (150, 150'), respectively.

15. A computer program product comprising instructions which when executed by one or more processors (110), cause the one or more processors to carry out the method according to claim 14.
